# EUROPEAN PATENT APPLICATION

(11) **EP 2 717 153 A1**
(43) Date of publication of application: **09.04.2014**
(21) Application number: 13150597.6
(22) Date of filing: 09.01.2013
(51) Int. Cl.: G06F 3/06

(54) **In file storage system the detection and reclaim method of generic zero data thereof**

(30) Priority: 03.10.2012 TW 101136535
(71) Applicant: QSAN Technology Inc., Neihu Taipei (TW)
(72) Inventor: Huang, Chun-Ta, Taipei (TW)
(74) Representative: Becker Kurig Straus

(57) **Abstract**

A file storage system and detection and reclaim method of generic zero data thereof is provided, and the method is adapted for each data block in a file. The method includes following steps: detecting whether the content of the data block is a consecutive bit-stream pattern while executing a file write action; determining the data block is a generic zero page if the content of the data block is the consecutive bit-stream pattern; determining the data block is a non-generic zero page if the content of the data block is not the consecutive bit-stream pattern, and saving the non-generic zero page in a storage device; while executing a file read action, reclaiming the bit-stream pattern to the related data block if the data block is the generic zero page; and capturing the related data block from the storage device if the data block is the non-generic zero page.

## Description

### BACKGROUND

### Technical Field

The invention relates generally to a file storage system and a detection and reclaim method of generic zero data, and more particularly to a file storage system and a detection and reclaim method of generic zero data of each data block in a compressed and decompressed file.

### Related Art

Current zero reclaim techniques are compression techniques which define zero data generally. These techniques mainly compare default values of zero to each data block in a file. If the comparison results in a complete match of all the zero default values, then this block is not saved and only flagged for identification. When executing the file read algorithm, zeros are simply duplicated and viewed as default values, and the afore-described constitute a conventional zero reclaim technique.

An advantage of the zero reclaim techniques is the simple compression of data blocks or file data having all zero values to zero, thereby saving storage space for the real data. Due to zero entropy, these simple compression methods can provide the saved space for other data blocks. However, a drawback is that the compression range is too narrow, which is only suitable for data blocks or files having all zero values.

### SUMMARY

The invention provides a detection and reclaim method of generic zero data, adapted for each of a plurality of data blocks in a file, the method including the following steps. Whether a content of the data block is a consecutive bit-stream pattern is detected while executing a file write action. The data block is determined to be a generic zero page if the content of the data block has the same consecutive bit-stream pattern. The data block is determined to be a non-generic zero page if the content of the data block does not have the same consecutive bit-stream pattern, and the non-generic zero page is saved in the storage device. A determination result of the generic zero page and the non-generic zero page, the bit-stream pattern, a bit number of each generic zero page, and a bit number of each non-generic zero page of the file are saved in a data control block, and the data control block is saved in the storage device. While executing a file read action, the data control block is read. If the data block is the generic zero page, the consecutive bit-stream pattern is reclaimed to the related data block according to the bit-stream pattern and the bit number of each generic zero page. Moreover, if the data block is the non-generic zero page, the related data block is read from the storage device according to the bit number of each non-generic zero page.

According to an embodiment of the invention, before detecting whether the content of the data block is the consecutive bit-stream pattern, the detection and reclaim method of generic zero data further includes the following steps. Whether a bit number of the data block is an integer multiple of a bit number of the bit-stream pattern is detected. If a bit number of a first data block is not an integer multiple of the bit number of the bit-stream pattern, and when the bit number of the first data block is Y, the bit number of the bit-stream pattern is P, Y=N×P+X, X being a bit number of a remaining data bit-stream of the first data block not filling the bit number P of the bit-stream pattern, whether a content of the first N×P bits of the first data block is the consecutive bit-stream pattern is determined, in which Y, N, P, and X are positive integers. If the content of the first N×P bits of the first data block is not the consecutive bit-stream pattern, the first data block is determined to be the non-generic zero page.

According to an embodiment of the invention, the detection and reclaim method of generic zero data further includes the following steps. Whether the content of the first N×P bits of the first data block is the consecutive bit-stream pattern is determined, and whether the remaining X data bit-stream matches the first X bits of the bit-stream pattern is determined. If yes, the first data block is determined to be the generic zero page. Moreover, if no, the first data block is determined to be the non-generic zero page.

According to an embodiment of the invention, after reading the data control block while executing the file read action, for the generic zero page portion already determined, the detection and reclaim method of generic zero data further includes the following steps. Whether the bit number of the generic zero page is an integer multiple of the bit number of the bit-stream pattern is determined. If yes, the consecutive bit-stream pattern is reclaimed to the related data block according to the bit-stream pattern and the bit number of each generic zero page. Moreover, if no, the bit-stream pattern and the bit number of each generic zero page are reclaimed to the related data block, in which the first N×P bits of the generic zero page are restored in the consecutive bit-stream pattern, and the remaining X data bit-stream of the bit-stream pattern are appended to the end as reclaimed completely.

According to an embodiment of the invention, the detection and reclaim method of generic zero data further includes recording the determination result of the generic zero page and the non-generic zero page, the bit-stream pattern, the bit number of each generic zero page, and the bit number of each non-generic zero page with a metadata format in the data control block, and saving the data control block in the storage device, and while executing the file read action, reading the metadata in the data control block.

According to an embodiment of the invention, the detection and reclaim method of generic zero data is suitable for a block based Internet Protocol storage area network (IP-SAN) system or a file based network attached storage (NAS) system.

According to an embodiment of the invention, in the detection and reclaim method of generic zero data, the bit-stream pattern is a 64 bit combination of binary numbers, and a size of each data block in the file is 128 KB.

The invention provides a file storage system, adapted for detecting and reclaiming generic zero data of each of a plurality of data blocks in a file, the file storage system including a storage device and a control module. The control module is coupled to the storage device. The control module detects whether a content of the data block is a consecutive bit-stream pattern while executing a file write action, determines the data block to be a generic zero page if the content of the data block is the consecutive bit-stream pattern, determines the data block to be a non-generic zero page if the content of the data block is not the consecutive bit-stream pattern, and saves the non-generic zero page in the storage device. Thereafter, the control module records a determination result of the generic zero page and the non-generic zero page, the bit-stream pattern, a bit number of each generic zero page, and a bit number of each non-generic zero page of the file in a data control block, and saves the data control block in the storage device. While executing a file read action, the control module reads the data control block. If the data block is the generic zero page, the control module reclaims the consecutive bit-stream pattern to the related data block according to the bit-stream pattern and the bit number of each generic zero page. Moreover, if the data block is the non-generic zero page, the control module reads the related data block from the storage device according to the bit number of each non-generic zero page.

In summary, embodiments of the invention provide a file storage system and a detection and reclaim method of generic zero data thereof. In contrast with conventional generic zero reclaim techniques, the generic zero page is not viewed as only data blocks formed by all zero patterns. The file storage system provided by embodiments of the invention may have different designs for the bit-stream pattern according to the system requirements, and the bit-stream pattern is not limited to the all zero data pattern. In other words, a data block can be determined to be the generic zero page when the content of the data block is the predetermined consecutive bit-stream pattern.

Several exemplary embodiments accompanied with figures are described in detail below to further describe the disclosure in details.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.

FIG. 1 is a functional block diagram of a file storage system according to an embodiment of the invention.

FIG. 2A is a flow diagram of a detection and reclaim method of generic zero data according to an embodiment of the invention.

FIG. 2B is a flow diagram of a detection and reclaim method of generic zero data according to another embodiment of the invention.

### DESCRIPTION OF EMBODIMENTS

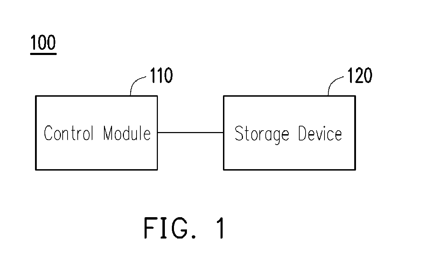

FIG. 1 is a functional block diagram of a file storage system according to an embodiment of the invention. A file storage system 100 includes a control module 110 and a storage device 120 for executing a detection and reclaim method of generic zero data for each of a plurality of data blocks in a file. The detection and reclaim method is suitable for a block based Internet Protocol storage area network (IP-SAN) system or a file based network attached storage (NAS) system. The control module may be a functional block implemented by hardware and/or software. The hardware may include hardware devices with computational functions such as a central processor, a chipset, a microprocessor, or a combination of the aforementioned hardware devices, and the software may be an operating system or a driver program. The storage device 120 is coupled to the control module 110, and the storage device 120 may be an electronic device with file data storage functions such as a hard disk.

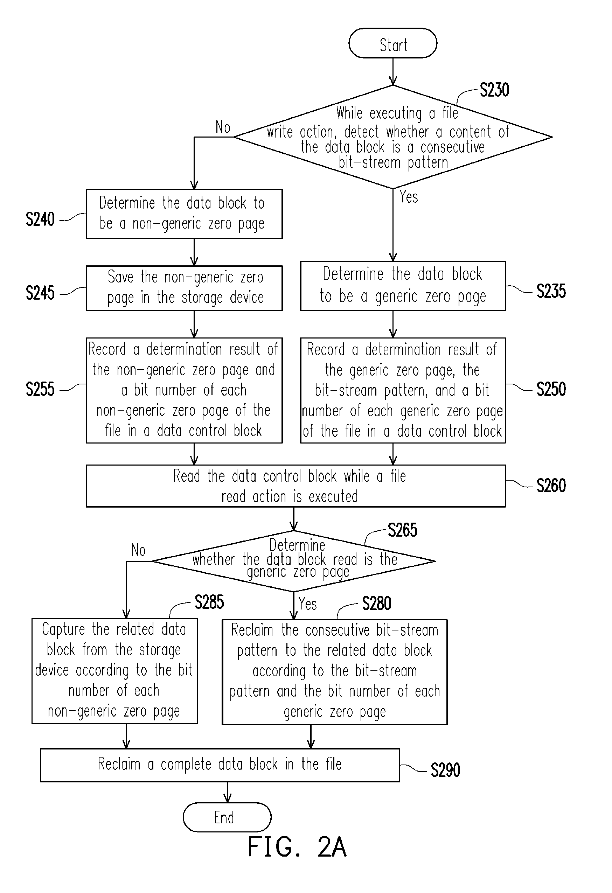

FIG. 2A is a flow diagram of a detection and reclaim method of generic zero data according to an embodiment of the invention. Please to refer to FIGs. 1 and 2A. While executing a file write action, the control module 110 detects whether a content of the data block is a consecutive bit-stream pattern (Step S230). A size of each data block in the file may be 128 KB, and the bit-stream pattern may be a 64 bit combination of binary numbers predetermined by a system software. Using 64 bit in the present embodiment as an illustrative example, conventionally all 64 bits should be binary number 0 to be viewed as generic zero data. However, embodiments of the invention are not limited thereto. The system software can design different combinations of bit-stream patterns according to the requirements, and therefore the bit-stream pattern viewed as generic zero data may have 2⁶⁴ variations. Moreover, the bit number of the bit-stream pattern in the invention may be adjusted based on usage requirements or according to a ratio of data block bit number/bit-stream pattern bit number to obtain a preferable efficiency, and therefore is not limited to 64 bits. Furthermore, embodiments of the invention do not limit each generic zero page in the file to use the same bit-stream pattern.

After Step S230, the control module 110 determines the data block to be a generic zero page if the content of the data block is the consecutive bit-stream pattern (Step S235). Thereafter, a determination result of the generic zero page, the bit-stream pattern, and a bit number of each generic zero page in the file are recorded in a data control block (Step S250). On the other hand, the control module 110 determines the data block to be a non-generic zero page if the content of the data block is not the consecutive bit-stream pattern (Step S240), and the non-generic zero page is saved in the storage device 120 (Step S245). Moreover, a determination result of the non-generic zero page, the bit-stream pattern, and a bit number of each non-generic zero page are recorded in the data control block (Step S255). Each data stored in the data control block is recorded with a metadata format in the data control block, and the control module 110 stores the data control block in the storage device 120.

While a file read action is executed, firstly the data control block is read (Step S260). Thereafter, the control module 110 determines whether the data block read is the generic zero page (Step S265). If the data block is the generic zero page, the consecutive bit-stream pattern is reclaimed to the related data block according to the bit-stream pattern and the bit number of each generic zero page (Step S280). If the data block is the non-generic zero page, the related data block from the storage device 120 is read back according to the bit number of each non-generic zero page (Step S285). A complete data block is then reclaimed in the file according to the afore-described steps (Step S290).

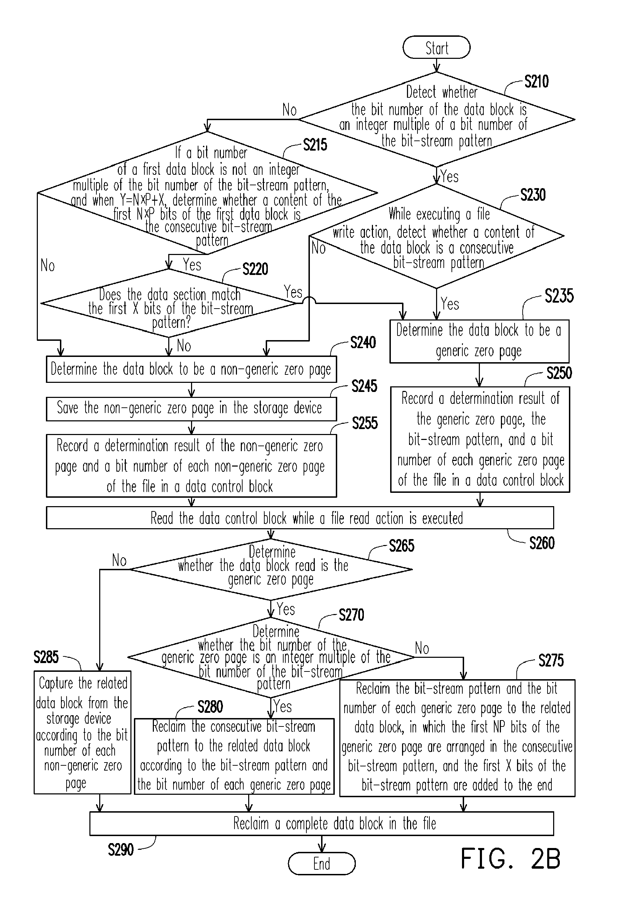

FIG. 2B is a flow diagram of a detection and reclaim method of generic zero data according to another embodiment of the invention. When the data block to detect is not an integer multiple of the bit-stream pattern, embodiments of the invention also provide the corresponding detection methods. The control module 110 detects whether the bit number of the data block is an integer multiple of a bit number of the bit-stream pattern (Step S210). If the detection result of Step S210 is yes, then the process proceeds to Step S230, and whether a content of the data block is a consecutive bit-stream pattern is detected. If the detection result of Step S230 is yes, then whether the data block is a generic zero page is determined (Step S235). In Step S210, if a bit number of a first data block is not an integer multiple of the bit number of the bit-stream pattern, then the determination result of Step S210 is no. For example, when the bit number of the first data block is Y, the bit number of the bit-stream pattern is P, Y and P may be represented by Y=N×P+X, in which X is a bit number of a remaining data bit-stream of the first data block not filling the bit number P of the bit-stream pattern, and Y, N, P, and X are positive integers, then the determination result of Step S210 is no. Thereafter, whether a content of the first N×P bits of the first data block is the consecutive bit-stream pattern is determined (Step S215).

If the determination result of Step S215 is no, the control module 110 determines whether the data block is the non-generic zero page (Step S240). If determination result of Step S215 is yes, then whether the remaining data bit-stream not filling a bit-stream pattern matches the first X bits of the bit-stream pattern is determined (Step S220). If the determination result of Step S220 is yes, the control module 110 determines whether the data block is the generic zero page (Step S235). If the determination result of Step S220 is no, then whether the data block is the non-generic zero page is determined (Step S240).

After Step S230, the determination result of the generic zero page, the bit-stream pattern, and the bit number of each generic zero page of the file are recorded in the data control block (Step S250). After Step S240, the non-generic zero page is saved in the storage device 120 (Step S245), and the determination result of the non-generic zero page, and the bit number of each non-generic zero page of the file are recorded in the data control block (Step S255).

While a file read action is executed, firstly the data control block is read (Step S260). Thereafter, the control module 110 determines whether the data block read is the generic zero page (Step S265). If the determination result of Step S265 is no, the related data block from the storage device 120 of the non-generic zero page portion is read according to the bit number of each non-generic zero page (Step S285).

If the determination result of Step S265 is yes, then for the generic zero page portion already determined, whether the bit number of the generic zero page is an integer multiple of the bit number of the bit-stream pattern is determined (Step S270). If the determination result of Step S270 is yes, then for the generic zero page portion, the consecutive bit-stream pattern is reclaimed to the related data block according to the bit-stream pattern and the bit number of each generic zero page (Step S280). If the determination result of Step S270 is no, the bit-stream pattern and the bit number of each generic zero page is reclaimed to the related data block, in which the first N×P bits of the generic zero page are restored in the consecutive bit-stream pattern, and the first X bits of the bit-stream pattern are appended to the end as reclaimed completely (Step S275). A complete data block is then reclaimed in the file according to the afore-described steps (Step S290).

In view of the foregoing, embodiments of the invention provide a file storage system and a detection and reclaim method of generic zero data thereof. In contrast with conventional generic zero reclaim techniques, the generic zero page is not viewed as only data blocks formed by all zero patterns. The file storage system provided by embodiments of the invention may have different designs for the bit-stream pattern according to the system requirements, and the bit-stream pattern is not limited to the all zero data pattern. For example, when the bit-stream pattern has 64 bits, then the bit-stream pattern can have 2⁶⁴ variations. Moreover, the generic zero pages in the same file are not limited to being detected by using the same bit-stream pattern. Accordingly, the applicable layers of the invention are preferably diverse. Besides, the length of the bit-stream pattern used in the method may be set according to the application requirements, such as according to the ratio of the data block size to the length of the bit-stream pattern so as to obtain a preferable efficiency, and therefore the bit-stream pattern is not limited to 64 bits in the embodiments of the invention.

Although the invention has been described with reference to the above embodiments, it will be apparent to one of the ordinary skill in the art that modifications to the described embodiment may be made without departing from the spirit of the invention. Accordingly, the scope of the invention will be defined by the attached claims not by the above detailed descriptions.

## Claims

1. A detection and reclaim method of generic zero data, adapted for each of a plurality of data blocks in a file, the method comprising:
detecting whether a content of the data block is a consecutive bit-stream pattern while executing a file write action;
determining the data block to be a generic zero page if the content of the data block is the consecutive bit-stream pattern;
determining the data block to be a non-generic zero page if the content of the data block is not the consecutive bit-stream pattern, and saving the non-generic zero page in a storage device (120);
recording a determination result of the generic zero page and the non-generic zero page, the bit-stream pattern, a bit number of each generic zero page, and a bit number of each non-generic zero page of the file in a data control block, and saving the data control block in the storage device (120);
while executing a file read action, reading the data control block;
if the data block is the generic zero page, reclaiming the consecutive bit-stream pattern to the related data block according to the bit-stream pattern and the bit number of each generic zero page; and
if the data block is the non-generic zero page, capturing the related data block from the storage device (120) according to the bit number of each non-generic zero page.

2. The detection and reclaim method of generic zero data of claim 1, wherein before detecting whether the content of the data block is the consecutive bit-stream pattern, the method further comprises:
detecting whether a bit number of the data block is an integer multiple of a bit number of the bit-stream pattern;
if a bit number of a first data block is not an integer multiple of the bit number of the bit-stream pattern, and when the bit number of the first data block is Y, the bit number of the bit-stream pattern is P, Y=N×P+X, X being a bit number of a remaining data bit-stream of the first data block not filling the bit number P of the bit-stream pattern, determining whether a content of the first N×P bits of the first data block is the consecutive bit-stream pattern, wherein Y, N, P, and X are positive integers; and
if the content of the first N×P bits of the first data block is not the consecutive bit-stream pattern, determining the first data block to be the non-generic zero page.

3. The detection and reclaim method of generic zero data of claim 2, further comprising:
if the content of the first N×P bits of the first data block is the consecutive bit-stream pattern, determining whether the remaining data bit-stream matches the first X bits of the bit-stream pattern;
if yes, determining the first data block to be the generic zero page; and
if no, determining the first data block to be the non-generic zero page.

4. The detection and reclaim method of generic zero data of claim 3, wherein after reading the data control block while executing the file read action, for the generic zero page portion already determined, the method further comprises:
determining whether the bit number of the generic zero page is an integer multiple of the bit number of the bit-stream pattern;
if yes, reclaiming the bit-stream pattern consecutively to the related data block according to the bit-stream pattern and the bit number of each generic zero page; and
if no, reclaiming the bit-stream pattern and the bit number of each generic zero page to the related data block, wherein the first N×P bits of the generic zero page are restored in the consecutive bit-stream pattern, and the remaining data bit-stream of the first X bits of the bit-stream pattern are appended to the end as reclaimed completely.

5. The detection and reclaim method of generic zero data of claim 1, further comprising:
recording the determination result of the generic zero page and the non-generic zero page, the bit-stream pattern, the bit number of each generic zero page, and the bit number of each non-generic zero page with a metadata format in the data control block, and saving the data control block in the storage device (120); and
while executing the file read action, reading the metadata in the data control block.

6. The detection and reclaim method of generic zero data of claim 1, wherein the method is suitable for a block based Internet Protocol storage area network (IP-SAN) system or a file based network attached storage (NAS) system.

7. The detection and reclaim method of generic zero data of claim 1, wherein the bit-stream pattern is a 64 bit combination of binary numbers, and a size of each data block in the file is 128 KB.

8. A file storage system (100), adapted for detecting and reclaiming generic zero data of each of a plurality of data blocks in a file, the file storage system (100) comprising:
a storage device (120); and
a control module (110) coupled to the storage device (120), the control module (110) detecting whether a content of the data block is a consecutive bit-stream pattern while executing a file write action, determining the data block to be a generic zero page if the content of the data block is the consecutive bit-stream pattern, determining the data block to be a non-generic zero page if the content of the data block is not the consecutive bit-stream pattern, and saving the non-generic zero page in the storage device (120), recording a determination result of the generic zero page and the non-generic zero page, the bit-stream pattern, a bit number of each generic zero page, and a bit number of each non-generic zero page of the file in a data control block, and saving the data control block in the storage device (120), while executing a file read action, reading the data control block, if the data block is the generic zero page, reclaiming the consecutive bit-stream pattern to the related data block according to the bit-stream pattern and the bit number of each generic zero page, and if the data block is the non-generic zero page, capturing the related data block from the storage device (120) according to the bit number of each non-generic zero page.

9. The file storage system (100) of claim 8, further comprising the control module (110) detecting whether a bit number of the data block is an integer multiple of a bit number of the bit-stream pattern, if a bit number of a first data block is not an integer multiple of the bit number of the bit-stream pattern, and when the bit number of the first data block is Y, the bit number of the bit-stream pattern is P, Y=N×P+X, X being a bit number of a remaining data bit-stream of the first data block not filling the bit number P of the bit-stream pattern, determining whether a content of the first N×P bits of the first data block is the consecutive bit-stream pattern, wherein Y, N, P, and X are positive integers, and if the content of the first N×P bits of the first data block is not the consecutive bit-stream pattern, determining the first data block to be the non-generic zero page.

10. The file storage system (100) of claim 9, further comprising the control module (110) determining whether the content of the first N×P bits of the first data block is the consecutive bit-stream pattern, and determining whether the remaining data bit-stream matches the first X bits of the bit-stream pattern, if yes, the control module (110) determining the first data block to be the generic zero page, and if no, the control module (110) determining the first data block to be the non-generic zero page.

11. The file storage system (100) of claim 10, further comprising after reading the data control block while executing the file read action, for the generic zero page portion already determined, the control module (110) determining whether the bit number of the generic zero page is an integer multiple of the bit number of the bit-stream pattern, if yes, reclaiming the bit-stream pattern consecutively to the related data block according to the bit-stream pattern and the bit number of each generic zero page, and if no, reclaiming the bit-stream pattern and the bit number of each generic zero page to the related data block, wherein the first N×P bits of the generic zero page are restored in the consecutive bit-stream pattern, and the first X bits of the bit-stream pattern are appended to the end as reclaimed completely.

12. The file storage system (100) of claim 8, further comprising the control module (110) recording the determination result of the generic zero page and the non-generic zero page, the bit-stream pattern, the bit number of each generic zero page, and the bit number of each non-generic zero page with a metadata format in the data control block, and saving the data control block in the storage device (120), and while executing the file read action, reading the metadata in the data control block.

13. The file storage system (100) of claim 8, wherein the file storage system (100) is suitable for a block based Internet Protocol storage area network (IP-SAN) system or a file based network attached storage (NAS) system.

14. The file storage system (100) of claim 8, wherein the bit-stream pattern is a 64 bit combination of binary numbers, and a size of each data block in the file is 128 KB.
